# EUROPÄISCHE PATENTSCHRIFT

(11) **EP 2 099 635 B1**
(45) Veröffentlichungstag und Bekanntmachung des Hinweises auf die Patenterteilung: **04.01.2012**
(21) Anmeldenummer: 07820772.7
(22) Anmeldetag: 01.10.2007
(51) Int. Cl.: B60K 31/00, B60W 30/16

(54) **VERFAHREN UND VORRICHTUNG ZUR REGELUNG DER GESCHWINDIGKEIT EINES KRAFTFAHRZEUGS**
METHOD AND DEVICE FOR REGULATING THE SPEED OF A MOTOR VEHICLE
PROCÉDÉ ET DISPOSITIF POUR RÉGULER LA VITESSE D'UN VÉHICULE AUTOMOBILE

(30) Priorität: 15.11.2006 DE 102006054220
(43) Veröffentlichungstag der Anmeldung: 16.09.2009
(73) Patentinhaber: Robert Bosch GmbH, 70442 Stuttgart (DE)
(72) Erfinder: DORENKAMP, Stephan, 71640 Ludwigsburg (DE); GRUBER, Thomas, 71229 Leonberg (DE); URBAN, Werner, 71665 Vaihingen/Enz (DE); BOECKER, Juergen, 70176 Stuttgart (DE)
(86) Internationale Anmeldenummer: PCT/EP2007/060388
(87) Internationale Veröffentlichungsnummer: WO 2008/058809

(56) Entgegenhaltungen:
- EP-A- 1 486 370
- DE-A1- 10 308 256
- DE-A1- 19 637 245

## Beschreibung

Die vorliegende Erfindung betrifft ein Verfahren und eine Vorrichtung zur Regelung der Geschwindigkeit eines Kraftfahrzeugs, wobei die Vorrichtung mit einem Objektdetektionssystem ausgestattet ist und bei dem die Sollgeschwindigkeit in Abhängigkeit mindestens eines vorausfahrenden Fahrzeugs im Auswertebereich des Objektdetektionssystems bestimmt wird, wobei bei Erkennung eines bevorstehenden Spurwechsels des geregelten Fahrzeugs zur Berechnung der Sollgeschwindigkeit zusätzlich Fahrzeuge auf der benachbarten Zielfahrspur berücksichtigt werden, indem der Auswertebereich in Richtung Zielfahrspur erweitert wird und nur die Fahrzeuge auf der Zielfahrspur berücksichtigt werden, deren Entfernung zum geregelten Fahrzeug kleiner als ein vorbestimmter Entfernungswert ist. Zusätzlich kann vorgesehen sein, dass der Auswertebereich auf der der Zielfahrspur entgegengesetzten Seite während dem Spurwechsel verringert wird.

Unter dem Begriff der Zielfahrspur ist hierbei im Rahmen der vorliegenden Erfindung diejenige benachbarte Fahrspur gemeint, auf die das geregelte Fahrzeug mittels einer Spurwechselaktion wechseln möchte. Im Rahmen der Offenbarung der vorliegenden Erfindung wurde hierbei beispielhaft ein Spurwechsel eines Fahrzeugs von einer mittleren Fahrspur M auf eine rechte Fahrspur R einer dreispurigen Straße beschrieben. Diese Offenbarung ist jedoch nur beispielhaft erläutert. Selbstverständlich ist im Rahmen der Erfindung jeder Spurwechsel von einer beliebigen Fahrspur auf eine andere beliebige, linksseitige oder rechtsseitige, benachbarte Fahrspur gemeint, wobei hier gegebenenfalls die Angaben "Links", "Rechts" und "Mitte" entsprechend abzuändern sind.

### Stand der Technik

Aus der DE 196 37 245 A1 ist ein Verfahren und eine Vorrichtung zur Regelung der Geschwindigkeit eines Fahrzeugs unter Berücksichtigung vorausfahrender Fahrzeuge bekannt. Um ein vorausfahrendes Fahrzeug als Regelungsziel auszuwählen, wird ein zukünftiger Fahrstreifenverlauf bestimmt. Bei einem beabsichtigtem und/oder beginnenden Spurwechsel des geregelten Fahrzeugs wird der bestimmte zukünftige Fahrstreifen erweitert.

Aus der DE 103 08 256 A1 ist ein Verfahren nach dem Oberbegriff des Anspruchs 1 bekannt, wobei das Assistenzsystem unter Verwendung dieser Größen eine Beschleunigung oder eine Verzögerung des Fahrzeugs bewirkt. Weiterhin wird dann, wenn der Ist-Zeitabstand (Ist-Zeitlücke) und/oder der Ist-Abstand (Ist-Distanz) des Fahrzeugs zum vorausfahrenden Fahrzeug größer als ein vorgebbarer jeweiliger unterer und kleiner als ein vorgebbarer jeweiliger oberer Grenzwert ist, das Assistenzsystem unter Ausschluß eines Ziel-Zeitabstandes angesteuert.

Hierdurch werden bei einem beabsichtigen Spurwechsel auch Fahrzeuge in der Nebenspur berücksichtigt, wobei es oftmals zu Fehlreaktionen des Geschwindigkeitsreglers kommt, da auf der Nachbarspur Fahrzeuge berücksichtigt werden, die jedoch aufgrund ihrer großen Entfernung zum geregelten Fahrzeug zu Fehlreaktionen führen und für den Fahrer nicht nachvollziehbar und somit unkomfortabel sind.

### Offenbarung der Erfindung

Der Kern der vorliegenden Erfindung ist es, ein Verfahren und eine Vorrichtung anzugeben, so dass nur die Fahrzeuge auf der Nachbarspur erfasst werden, die für den geplanten Spurwechsel relevant sind. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise wird hierzu bei erkannter Spurwechselabsicht der Auswertebereich des Objektdetektionssensors über die eigene Fahrspur hinaus in Richtung der Zielfahrspur erweitert, wobei jedoch nur die Fahrzeuge auf der benachbarten Zielfahrspur berücksichtigt werden, deren Entfernung unterhalb einen gewissen Entfernungswert liegen. Hierdurch werden weit entfernte Fahrzeuge auf der benachbarten Zielfahrspur nicht berücksichtigt, wodurch ein fehlerhaftes und ungewolltes Reglerverhalten vermieden werden kann.

Vorteilhafterweise ist der Auswertebereich im wesentlichen so dimensioniert, dass er die momentan befahrene Fahrspur erfasst.

Weiterhin ist es vorteilhaft, dass der vorbestimmte Entfernungswert ein fest vorgegebener Wert ist, wodurch die Funktion einfach umsetzbar ist und das Reglerverhalten bezüglich der Entfernung immer nachvollziehbar ist oder aber der vorbestimmte Entfernungswert ein veränderlicher Wert ist, wodurch das Reglerverhalten auf die besondere Umfeldsituation in jeder Spurwechselsituation angepasst werden kann und das Verfahren durch diese Adaptivität besonders komfortabel wird. Beispielsweise kann der vorbestimmte, veränderliche Entfernungswert in Abhängigkeit der Geschwindigkeit des eigenen, geregelten Fahrzeugs erfolgen oder aber in Abhängigkeit der Relativgeschwindigkeit des detektierten Fahrzeugs auf der Zielfahrzeugspur bezüglich des geregelten, eigenen Fahrzeugs gestaltet werden.

Weiterhin ist es vorteilhaft, dass die Erkennung eines bevorstehenden Spurwechsels des geregelten Fahrzeugs durch die Auswertung einer Spurwechselerkennungseinrichtung erfolgt. Hierbei kann die Spurwechselerkennungseinrichtung beispielsweise mit dem Fahrtrichtungsanzeiger gekoppelt sein, so dass wenn der Fahrer den Blinkerhebel betätigt und der Fahrtrichtungsanzeiger aktiviert wird, das erfindungsgemäße System einen bevorstehenden Spurwechsel registriert. Weiterhin ist es möglich die bevorstehende Spurwechselabsicht mittels eines Gierratensignals zu erkennen, indem der Drehwinkel des Fahrzeugs um seine Hochachse ermittelt wird und aus der zeitlichen Ableitung dieses Drehwinkels erkannt werden kann, dass sich das eigene Fahrzeug in Richtung einer Nachbarspur bewegt. Derartige Systeme sind durch Fahrdynamikregelungen in den meisten modernen Fahrzeugen bereits vorhanden, so dass dieses zuverlässige Signals besonders vorteilhaft verwendbar ist. Eine weitere Möglichkeit, einen bevorstehenden Spurwechsel zu erkennen, besteht in der Auswertung eine Lenkradwinkelsignals, wobei beispielsweise in der Lenksäule des Lenkrads ein Drehwinkelsensor eingebaut ist, der eine Bewegung des Lenkrads, die zu einem Spurwechsel führen kann, detektiert.

Weiterhin ist es vorteilhaft, dass die Erweiterung des Auswertebereichs auf der Zielfahrspurseite und/oder die Verringerung des Auswertebereichs auf der der Zielfahrspurseite entgegengesetzten Seite nach Ablauf einer vorbestimmten Zeitdauer rückgängig gemacht wird, wobei die Zeitdauer üblicherweise so bemessen ist, dass in dieser Zeit ein durchschnittlicher Spurwechsel durchführbar ist. Alternativ ist es vorteilhaft, dass die Erweiterung des Auswertebereichs auf der Zielfahrspurseite und/oder die Verringerung des Auswertebereichs auf der der Zielfahrspurseite entgegengesetzten Seite dann rückgängig gemacht wird, wenn das Ende des Spurwechselvorgangs des geregelten Fahrzeugs durch Auswertung des Spurwechselsignals eines Spurwechselerkennungsmittels erkannt wird. Hierbei ist als Spurwechselerkennungsmittel wiederum die Fahrtrichtungsanzeige, ein Gierratensensor und/oder ein Lenkradwinkelsensor vorteilhaft vorgesehen.

Von besonderer Bedeutung ist die Realisierung des erfindungsgemäßen Verfahrens in der Form eines Steuerelements, das für ein Steuergerät einer adaptivem Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahren geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Kurze Beschreibung der Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßen Vorrichtung,
- Figur 2: eine schematische Draufsicht auf den Detektionsbereich des erfindungsgemäßen Systems,
- Figur 3: ebenfalls eine Draufsicht auf den Detektionsbereich eines Systems mit erweitertem Auswertebereich,
- Figur 4: eine schematische Draufsicht auf den Detektionsbereich des erfindungsgemäßen Systems mit erweitertem Auswertebereich und verringertem Auswertebereich und
- Figur 5: ein Ablaufdiagramm des erfindungsgemäßen Verfahrens.

### Ausführungsformen der Erfindung

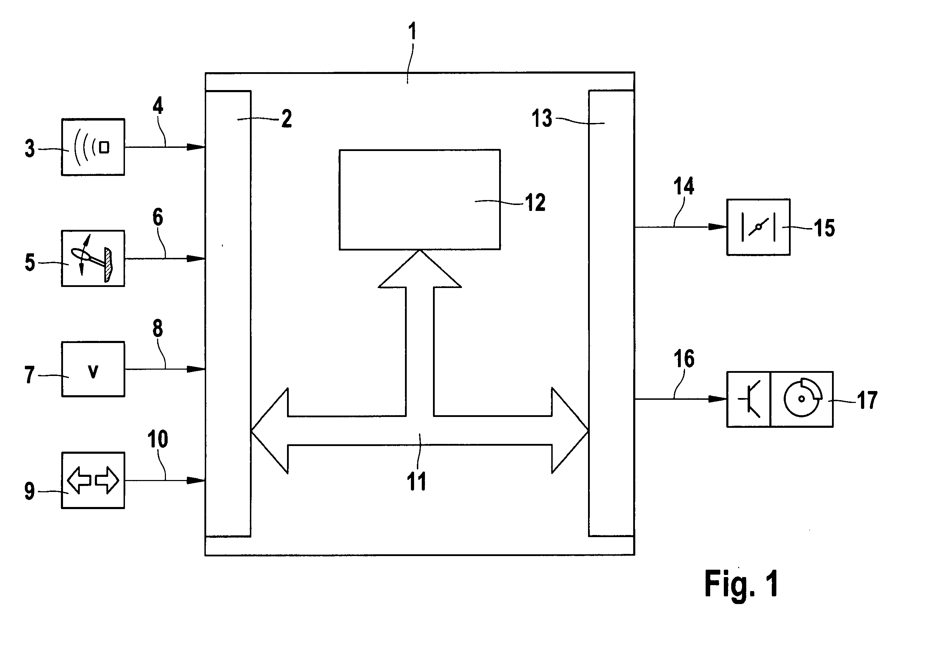

In Figur 1 ist ein adaptiver Abstandsregler 1 gezeigt, der über eine Eingangsschaltung 2 verfügt, mittels der dem adaptiven Abstandsregler 1 Eingangssignale 4, 6, 8, 10 zuführbar sind. Als Eingangssignale 4 sind Signale eines Objektdetektionssensors 3 vorgesehen, der beispielsweise als Lidarsensor, als Radarsensor, als Videosensor oder als Ultraschallsensor ausgestaltet sein kann. Hierbei ist die Ausgestaltung als Radarsensor besonders vorteilhaft, wobei hierbei der Abstand sowie die Relativgeschwindigkeit und der Azimutwinkel der detektierten Objekte vom Radarsensor 3 an die Eingangsschaltung 2 weitergegeben werden. Weiterhin werden der Eingangsschaltung 2 Eingangssignale 6 zugeführt, die von einem fahrerbetätigbaren Bedienelement stammen. Als fahrerbetätigbares Bedienelement 5 ist beispielsweise ein Lenkstockhebel oder Tasten am Lenkrad vorgesehen, mittels denen der Fahrer den adaptiven Abstandsregler 1 in Betrieb nehmen kann, abschalten kann sowie Betriebsparameter des Abstandsreglers 1 verändern kann. Weiterhin wird der Eingangsschaltung 2 des adaptiven Abstandsreglers 1 ein Eingangssignal 8 zugeführt, das von einem Fahrgeschwindigkeitssensor 7 stammt. Der Fahrgeschwindigkeitssensor 7 stellt hierbei ein Signal bereit, das die Geschwindigkeit des geregelten Fahrzeugs 18 repräsentiert und das dem adaptiven Abstandsregler 1 zugeführt wird, um die Relativgeschwindigkeit der mittels dem Objektdetektionssensor 3 erkannten Objekte in Absolutgeschwindigkeiten umrechnen zu können sowie geschwindigkeitsabhängige Funktionen steuern zu können. Weiterhin ist eine Spurwechselerkennungseinrichtung 9 vorgesehen, mittels der ein Spurwechselsignal 10 an die Eingangsschaltung 2 ausgebbar ist. Das Spurwechselerkennungsmittel 9 ist beispielsweise als Fahrtrichtungsanzeigeschalter ausgeführt, so dass, wenn der Fahrer den Blinkerhebel betätigt, dem adaptiven Abstands- und Geschwindigkeitsregler 1 mitgeteilt wird, dass der Fahrer einen Spurwechsel plant. Weiterhin ist es möglich, die Spurwechselerkennungseinrichtung 9 als Gierratensensor auszuführen, der den Drehwinkel des Fahrzeugs um dessen Hochachse misst und aus der zeitlichen Ableitung des Gierratenwinkels einen Spurwechsel erkennen kann. Alternativ kann als Spurwechselerkennungseinrichtung ein Lenkradwinkelsensor vorgesehen sein, der aus der Lenkradbetätigung einen beabsichtigten Spurwechsel erkennen kann. Dieses Spurwechselerkennungssignal 10 kann beispielsweise dem adaptiven Abstandsregler 1 angeben, ob ein Spurwechsel beabsichtigt wird sowie falls ein Spurwechsel beabsichtigt wird in welche Richtung dieser zu erwarten ist und gegebenenfalls wann dieser Spurwechselvorgang beendet wurde.

Die dem adaptiven Abstandsregler 1 mittels der Eingangsschaltung 2 zugeführten Eingangssignale 4, 6, 8, 10 werden mittels einer Datenaustauscheinrichtung 11 an eine Berechnungseinrichtung 12 weitergegeben, wo aus den Eingangssignalen unter Verwendung des erfindungsgemäßen Verfahrens Ausgangssignale ermittelt werden. Die in der Berechnungseinrichtung 12 ermittelten Ausgangssignale werden über die Datenaustauscheinrichtung 11 an eine Ausgangsschaltung 13 weitergegeben, die wiederum Ausgangssignale 14, 16 bereitstellt. Das Ausgangssignal 14 ist hierbei ein Beschleunigungssignal, das an ein leistungsbestimmendes Stellelement 15 einer Brennkraftmaschine ausgegeben wird und beispielsweise als Beschleunigungsanforderung oder als Momentenanforderung ausgeführt sein kann. Dieses Beschleunigungssignal wird durch das leistungsbestimmende Stellelement 15, das beispielsweise als elektrisch ansteuerbare Drosselklappe oder als elektrisch ansteuerbare Kraftstoffmengenzumesseinrichtung in Form eines Kraftstoffeinspritzventils eines Speichereinspritzsystems ausgeführt sein kann, in eine Fahrzeugbeschleunigung umgesetzt. Weiterhin wird von der Ausgangsschaltung 13 ein Verzögerungssignal 16 ausgegeben, das an eine Verzögerungseinrichtung 17 des Fahrzeugs angeschlossen ist. Hierbei wird das Verzögerungssignal als Verzögerungsanforderung, als Bremsdruckanforderung oder als Bremskraftanforderung ausgegeben und durch eine Bremskraftverstärkung an die Radbremsen des Fahrzeugs weitergegeben, die ihrerseits das Verzögerungssignal in eine Fahrzeugverzögerung umsetzen. Erfindungsgemäß wird im Fall, dass mittels der Spurwechselerkennungseinrichtung 9 ein geplanter Spurwechsel erkannt wird, dies dem adaptiven Abstandsregler 1 mitgeteilt, woraufhin in der Berechnungseinrichtung 12 der Auswertebereich der vom Objektdetektionssensor 3 erkannten Objekte derart verändert wird, dass der Auswertebereich in Richtung der Zielfahrspur erweitert wird. Hierdurch ist die Reglerreaktion auf Fahrzeuge in der benachbarten Zielfahrspur bereits frühzeitig umsetzbar, wodurch das Fahrzeug im Falle eines Spurwechsels ohne plötzliche Beschleunigungen oder Verzögerungen geregelt wird.

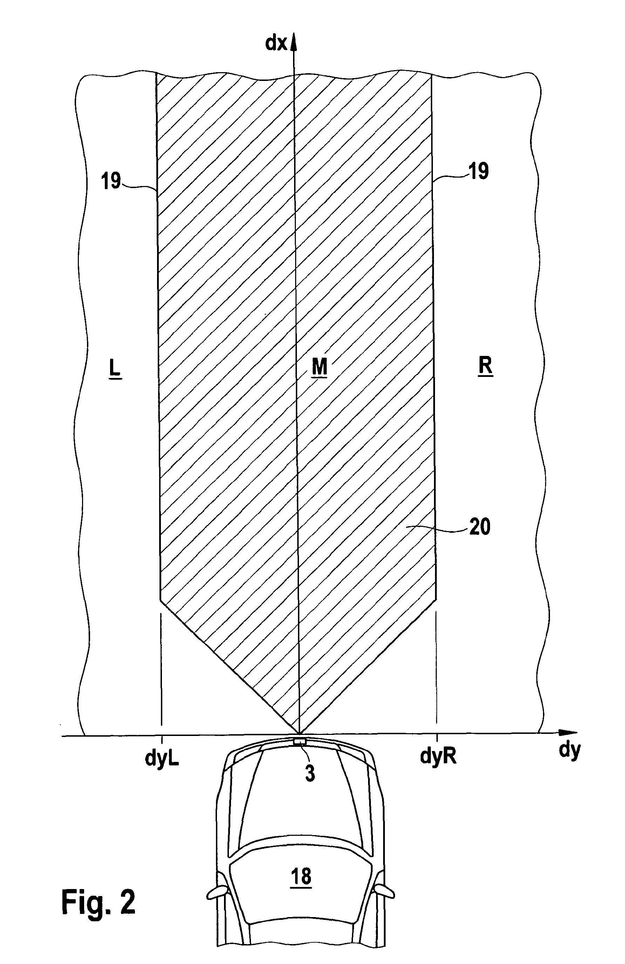

In Figur 2 ist der Auswertebereich des Objektdetektionssystems 3 schematisch bei Geradeausfahrt dargestellt. Zu erkennen ist das geregelte Fahrzeug 18, das an der Fahrzeugfront mit einem Objektdetektionssensor 3 ausgestattet ist. Der Objektdetektionssensor 3 kann im Fall, dass dieser als Radarsensor ausgestattet ist, Mikrowellenstrahlung aussenden und die an Objekten innerhalb des Detektionsbereichs reflektierte Teilstrahlung empfangen und den Abstand sowie die Relativgeschwindigkeit der erkannten Objekte erkennen. Hierzu ist dem Objektdetektionssensor 3 ein Koordinatensystem dx, dy einbeschrieben, wobei die Koordinatenachse dx in Richtung der verlängerten Fahrzeuglängsachse ausgerichtet ist und die Koordinatenachse dy in Lateralrichtung zur Fahrtrichtung ausgerichtet ist. Innerhalb des Objektdetektionsbereichs ist ein Auswertebereich 20 vorgesehen, der im wesentlichen den Bereich der momentan befahrenen Fahrspur umfasst und damit eine typische Breite von dyL bis dyR aufweist, wobei der Abstand zwischen dyL und dyR typischerweise einer Fahrspurbreite entspricht. Dieser Auswertebereich 20 wird seitlich im Bereich der Fahrspurbegrenzungen durch die seitlichen Auswertebereichsgrenzen 19 begrenzt. Durch das Vorsehen dieses Auswertebereichs werden nur die detektierten Objekte ausgewertet, die innerhalb dieses Bereichs liegen, nicht jedoch die Objekte die außerhalb des Auswertebereichs 20 liegen. Fährt das geregelte Fahrzeug 18 beispielsweise auf der mittleren Fahrspur M einer dreispurigen Straße, so wird beispielhaft durch den Auswertebereich 20 nur die mittlere Fahrspur M hinsichtlich relevanter Objekte ausgewertet. Objekte die sich links oder rechts neben der momentan befahrenen Fahrspur M befinden, d.h. Objekte mit Lateralversätzen von dy < dyL sowie Objekte die sich rechts neben dem Auswertebereich 20 befinden, also mit Lateralversätzen dy > dyR, befinden sich demnach auf der linken, benachbarten Fahrspur L bzw. auf der rechten, benachbarten Fahrspur R und werden nicht zur Bestimmung der Sollgeschwindigkeit des geregelten Fahrzeugs 18 berücksichtigt. Durch das Vorsehen dieses beschriebenen Auswertebereichs 20 werden Objekte in benachbarten Fahrspuren nicht ausgewertet, so dass langsamere Objekte auf Nachbarspuren oder stehende Objekte am Fahrbahnrand keinen Einfluss auf die Sollgeschwindigkeit des adaptiven Abstandsreglers 1 nehmen.

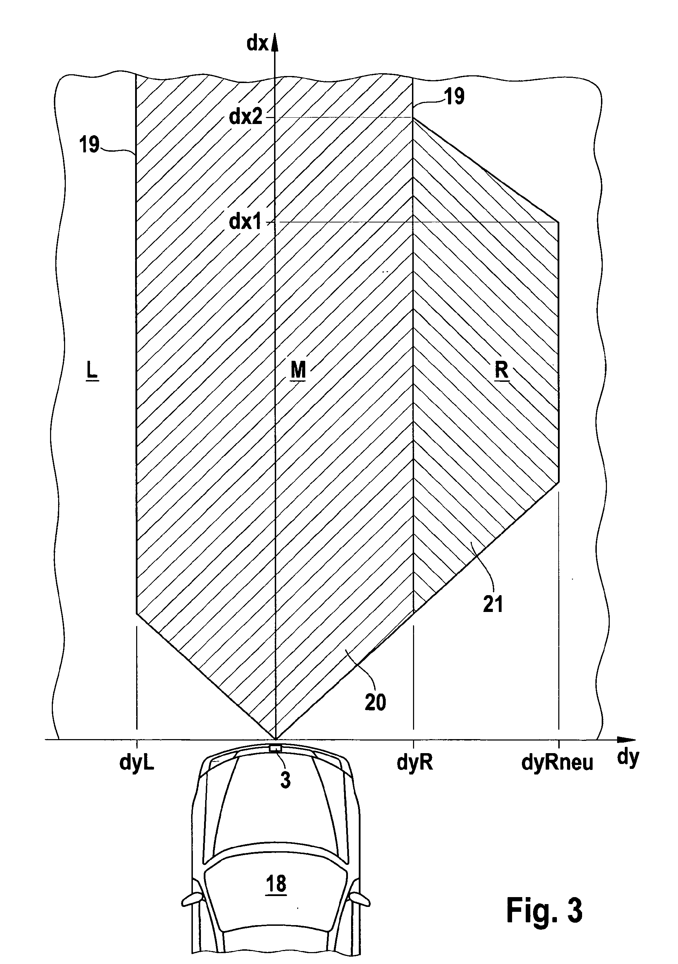

Wird während der Fahrt mit aktiviertem adaptiven Abstandsregler 1 durch die Spurwechselerkennungseinrichtung 9 ein bevorstehender Spurwechsel erkannt, so wird der relevante Auswertebereich innerhalb der Berechnungseinrichtung 12 verändert. Hierzu wird, wie in Figur 3 beschrieben, der Auswertebereich 20 auf der, der Zielfahrspur entsprechenden Seite, erweitert. Im Falle eines Spurwechsels nach Rechts ist die Zielfahrspur die rechte, benachbarte Fahrspur und im Fall eines beabsichtigten Spurwechsels nach Links ist die linke, benachbarte Fahrspur die Zielfahrspur. Im dargestellten Beispiel erkennt die Spurwechselerkennungseinrichtung 9 einen Spurwechsel nach Rechts, indem beispielsweise durch den Fahrer der Fahrtrichtungsanzeiger nach Rechts betätigt wurde oder eine entsprechende Lenkradbewegung ermittelt wurde oder ein entsprechendes Gierratensignal festgestellt wurde. In diesem Fall wird auf der Seite der Zielfahrspur, also im Bereich der Fahrspur R ein erweiterter Auswertebereich 21 vorgesehen, der einen Bereich auf der rechten Nachbarfahrspur auswertet. Hierbei ist die Breite des erweiterten Auswertebereichs 21 so bemessen, dass diese ebenfalls typischerweise eine Fahrspurbreite vorsieht, so dass die rechte Grenze des erweiterten Auswertebereichs 21 DY=DYRneu den dreifachen der halben Fahrspurbreite DYR entspricht. Erfindungsgemäß wird der erweiterte Auswertebereich 21 nur bis zu einer gewissen Entfernung dx ausgewertet wird, da weiter entfernte Objekte auf der Zielfahrspur für die momentane Regelung nicht berücksichtigt werden sollen. So sind zwei Auswertebereichsparameter dx1 und dx2 vorgesehen, wobei der erweiterte Auswertebereich 21, beginnend bei dx = dx1 beginnt, sich auf normale Breite zu verschmälern und bei der Entfernung dx2 der Auswertebereich 20 die seitlichen Grenzen 19 des Auswertebereichs 20 bei Geradeausfahrt, wie in Figur 2 beschrieben, erreicht. Die Auswertebereichsparameter dx1 und dx2 können hierbei fest vorgegebene Entfernungswerte sein, wahlweise ist es jedoch auch möglich, diese Entfernungswerte dx1 und dx2 in Abhängigkeit der momentanen Fahrzeuggeschwindigkeit V, die durch den Fahrgeschwindigkeitssensor 7 festgestellt wird oder in Abhängigkeit der Relativgeschwindigkeit Vrel, die mittels des Objektdetektionssensors 3 feststellbar ist, zu verändern. So kann beispielsweise die Länge des erweiterten Auswertebereichs 21 bei höheren Geschwindigkeiten V zu größeren Entfernungen dx hin verschoben werden. Durch die in Figur 3 dargestellte Erweiterung 21 des Auswertebereichs 20 im Entfernungsbereich von dx = 0 bis zu den Entfernungswerten dx = dx1 bzw. dx = dx2 werden nur die Fahrzeuge auf der Zielfahrspur berücksichtigt, die sich in einem für die Regelung der Sollgeschwindigkeit relevanten Entfernungsbereich aufhalten.

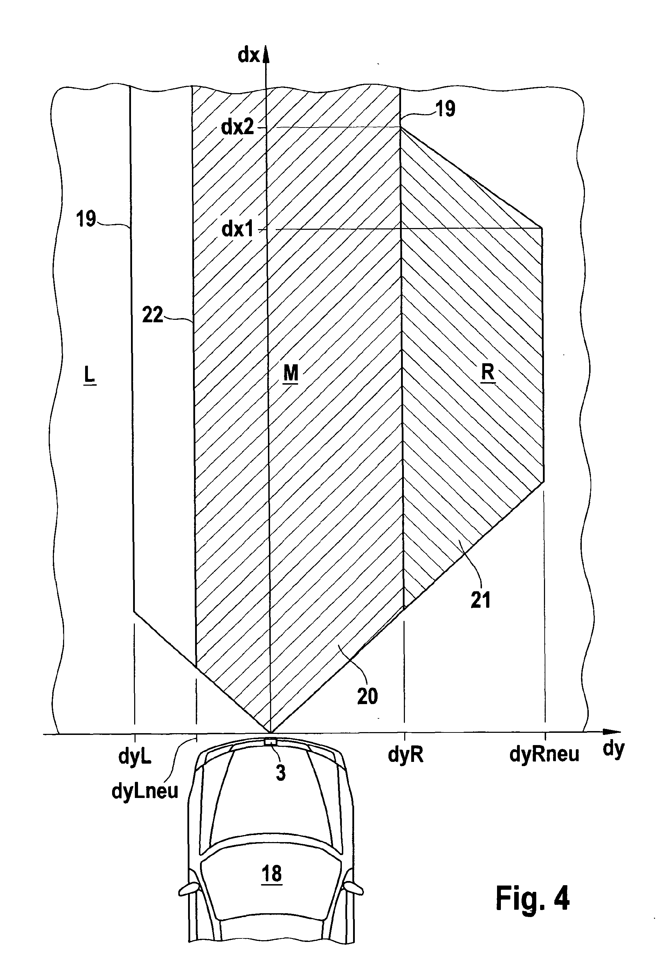

In Figur 4 ist eine erfindungsgemäße Ausgestaltung dargestellt, die im Falle eines erkannten Spurwechsels das Regelverhalten des adaptiven Abstandsreglers 1 verbessert. Zu erkennen ist wiederum das geregelte Fahrzeug 18 mit dem an der Frontseite befestigten Objektdetektionssensor 3, der den Bereich vor dem Fahrzeug hinsichtlich relevanter Objekte überwacht. Wird, wie im vorherigen Fall, ein Spurwechsel nach rechts auf die Fahrspur R erkannt, so werden nicht nur Objekte innerhalb des Bereichs der momentan befahrenen Fahrspur M, also Objekte mit einem Lateralversatz von dyL < dy < dyR erfasst, sondern zusätzlich auch Objekte auf der rechten, benachbarten Fahrspur R, die einen Lateralversatz von dyR < dy < dyRneu aufweisen, wobei dieser erweiterte Auswertebereich 21 nur bis zu Entfernungswerten dx = dx1 bzw. dx = dx2 zur Regelung herangezogen werden. Um Fahrzeuge, die sich auf der linken, benachbarten Fahrspur L befinden und eventuell zu nah an der mittleren Fahrspur M fahren oder die einen Fahrspurwechsel von der Fahrspur L auf die Fahrspur M beabsichtigen, bei der Bestimmung der Sollgeschwindigkeit des geregelten Fahrzeugs 18 mit Sicherheit nicht zu berücksichtigen, da ansonsten ungewollte Reglerreaktionen entstehen können, die der Fahrer als störend und teilweise als gefährlich empfinden kann, kann zusätzlich die linke Grenze 19 des Auswertebereichs 20 nicht mehr wie bislang bei dy = dyL positioniert werden, sondern diese kann so verschoben werden, dass der Auswertebereich 20 durch die Grenze 22 begrenzt wird, was in einer Verringerung des seitlichen Auswertebereichs 20 auf der, der Zielfahrspur R entgegengesetzten Seite resiltiert. Dies geschieht, indem die Auswertegrenze 19 linksseits zu betragsmäßig kleineren dy-Werten hin verändert wird, so dass die neue seitliche Auswertebereichsgrenze 22, die der Zielfahrspurseite entgegengesetzt ist, weiter zur Fahrspurmitte der momentan befahrenen Fahrspur M rückt.

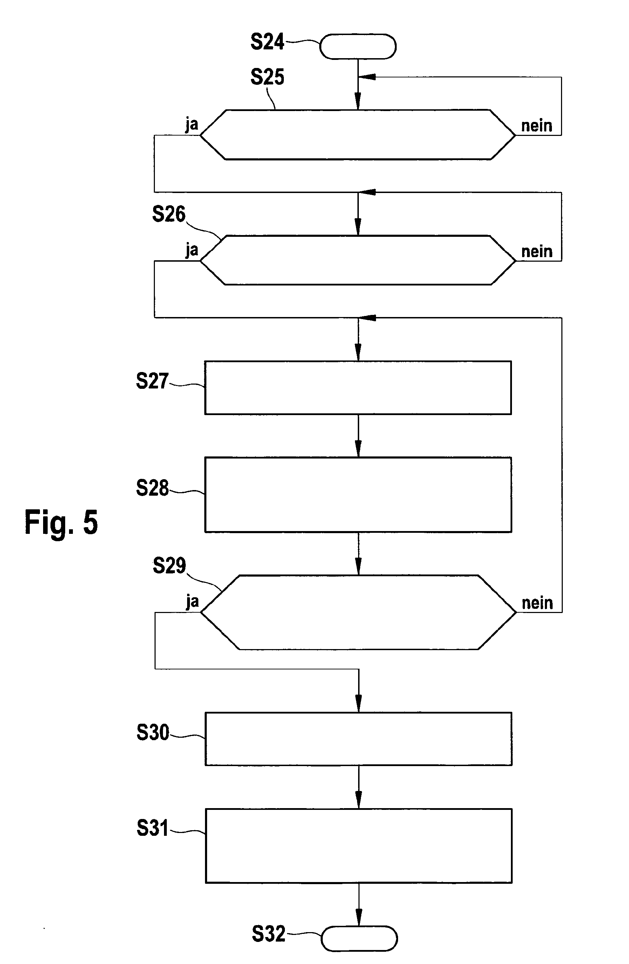

In Figur 5 ist ein Ablaufdiagramm des erfindungsgemäßen Verfahrens dargestellt. Das Ablaufdiagramm beginnt in Schritt S24, bei "Start", wobei sich Schritt S24 an einen eventuell vorhergehenden Schritt S32 "Ende" anschließen kann. Im folgenden Schritt S25 wird geprüft, ob der adaptive Abstands- und Geschwindigkeitsregler 1 aktiv oder deaktiv ist. Ist das ACC-System 1 ausgeschaltet, so verzweigt S25 nach nein und wartet bis zur Aktivierung des adaptiven Abstandsreglers 1. Ist der adaptive Abstands- und Geschwindigkeitsregler 1 aktivi, so verzweigt Schritt S25 nach ja und es wird in Schritt S26 abgefragt, ob ein Spurwechsel bevorsteht. Hierzu werden die Eingangssignale 10 der Spurwechselerkennungseinrichtung 9 ausgewertet. Ergibt diese Auswertung, dass kein Spurwechsel bevorsteht, so verzweigt Schritt S26 wieder nach nein und das Verfahren wartet solange, bis durch die Spurwechselerkennungseinrichtung 9 ein Spurwechsel erkannt wird. Bei Erkennung einer Spurwechselabsicht verzweigt das Verfahren in Schritt S26 nach ja und es wird in Schritt S27 der Auswertebereich 20, der die mittlere Fahrspur M erfasst, gemäß dem erweiterten Auswertebereich 21 auf die Zielfahrspur erweitert. Im folgenden Schritt S28 ist vorgesehen, dass der Auswertebereich 20 auf der der Zielfahrspur entgegengesetzten Seite, also der linken, benachbarten Fahrspur L, verengt wird, indem die linke Grenze 19 des Auswertebereichs 20 von dy = dyL nach dy = dyLneu verringert wird. In diesem Stadium wird für die Dauer des Spurwechsels der modifizierte Auswertebereich verarbeitet, in den Fahrzeuge auf der Zielfahrspur zur Ermittlung der Sollgeschwindigkeit des geregelten Fahrzeugs 18 herangezogen werden und eventuelle Objekte am linken Rand der momentan befahrenen Fahrspur M, also zwischen den linken Grenzen 19 und 22 des Auswertebereichs, zur Ermittlung der Sollgeschwindigkeit des geregelten Fahrzeugs nicht mehr berücksichtigt werden. Wird im darauffolgenden Schritt S29 mittels der Spurwechselerkennungseinrichtung 9 erkannt, dass der Spurwechsel noch nicht beendet ist oder im Fall, dass für den Spurwechsel eine vorbestimmte Zeitdauer noch nicht abgelaufen ist, so verzweigt Schritt S29 nach nein und es wird der veränderte Auswertebereich gemäß der vorhergehenden Schritte S27 und S28 aufrechterhalten. Wird in Schritt S29 erkannt, dass der Spurwechsel beendet ist oder dass die Zeitdauer, die für den Spurwechsel vorgesehen war, abgelaufen ist, so verzweigt Schritt S29 nach ja und es wird im folgenden Schritt S30 der erweiterte Auswertebereich 21 auf die momentan befahrene Fahrspurbreite zurückverengt, so dass Objekte mit einem Lateralversatz von dy > dyR nicht mehr für die Regelung ausgewertet werden. Dem Schritt S28 folgt Schritt S31, der vorsieht, dass der auf dy=dyLneu verengte Auswertebereich auf das alte Maß zurückgesetzt wird, indem die linke Grenze des Auswertebereichs 20 wieder auf den Lateralversatz dy = dyL zurückgesetzt wird. Wurde gemäß der Schritte S30 und/oder S31 der ursprüngliche Auswertebereich 20 wiederhergestellt und fährt das geregelte Fahrzeug 18 wiederum ohne Spurwechselabsicht geradeaus, so wird das erfindungsgemäße Verfahren mit Schritt S32 beendet und kann bei Erkennung eines neuen Spurwechsels in Schritt S26 wieder fortgesetzt werden.

## Patentansprüche

1. Verfahren zur Regelung der Geschwindigkeit eines Kraftfahrzeugs (18), das mit einem Objektdetektionssystem (3) ausgestattet ist und bei dem die Sollgeschwindigkeit in Abhängigkeit mindestens eines vorausfahrenden Fahrzeugs im Auswertebereich (20) des Objektdetektionssystems (3) bestimmt wird, wobei bei Erkennung eines bevorstehenden Spurwechsels des geregelten Fahrzeugs (18) zur Berechnung der Sollgeschwindigkeit zusätzlich Fahrzeuge auf der benachbarten Zielfahrspur (R) berücksichtigt werden, indem den Auswertebereich (20) in Richtung Zielfahrspur erweitert wird (21), und nur die Fahrzeuge auf der Zielfahrspur (R) berücksichtigt werden, deren Entfernung (dx1, dx2) zum geregelten Fahrzeugs (18) kleiner als ein vorbestimmter Entfernungswert ist, und wobei der Auswertebereich (22) auf der der Zielfahrspur entgegengesetzten Seite (L) während dem Spurwechsel verringert wird, **dadurch gekennzeichnet, dass** die Verringerung des Auswertebereichs (22) auf der der Zielfahrspur entgegengesetzten Seite (L) nur innerhalb des Entfernungsbereichs (dx1, dx2) erfolgt, innerhalb dessen der Auswertebereich auf der Zielfahrspurseite (R) erweitert wird.

2. Verfahren nach Anspruch 1, **dadurch gekennzeichnet, dass** der Auswertebereich (20) im wesentlichen die momentan befahrene Fahrspur (M) list.

3. Verfahren nach Anspruch 1 oder 2, **dadurch gekennzeichnet, dass** der vorbestimmte Entfernungswert (dx1, dx2) ein fest vorgegebener Wert ist.

4. Verfahren nach Anspruch 1 oder 2, **dadurch gekennzeichnet, dass** der vorbestimmte Entfernungswert (dx1, dx2) ein veränderlicher Wert ist.

5. Verfahren nach Anspruch 4, **dadurch gekennzeichnet, dass** der vorbestimmte Entfernungswert (dx1, dx2) von der Geschwindigkeit (v) des geregelten Fahrzeugs (18) abhängig ist.

6. Verfahren nach einem der vorhergehenden Ansprüche, **dadurch gekennzeichnet, dass** der vorbestimmte Entfernungswert (dx1, dx2) von der Relativgeschwindigkeit (vrel) des detektierten Fahrzeugs auf den Zielfahrzeugspur (R) bezüglich des geregelten Fahrzeugs (18) abhängig Ist.

7. Verfahren nach einem der vorhergehenden Ansprüchen, **dadurch gekennzeichnet, dass** die Erkennung eines bevorstehenden Spurwechsels des geregelten Fahrzeugs (18) durch Auswertung des Fahrtrichtungsanzelgersignals (9), durch Auswertung der momentanen Gierrate (9) und/oder durch Auswertung eines Lenkradwinkelsignals (9) geschieht.

8. Verfahren nach einem der vorhergehenden Ansprüche, **dadurch gekennzeichnet, dass** die Erweiterung des Auswertebereichs (21) auf der Zielfahrspurseite (R) und/oder die Verringerung des Auswertebereichs (22) auf der der Zielfahrspurseite entgegengesetzten Seite (L) nach Ablauf einer vorbestimmten Zeitdauer rückgängig gemacht wird.

9. Verfahren nach einem der vorhergehenden Ansprüche, **dadurch gekennzeichnet, dass** die Erweiterung des Auswertebereichs (21) auf der Zielfahrspurseite (R) und/oder die Verringerung des Auswertebereichs (22) auf der der Zielfahrspurseite entgegengesetzten Seite (L) nach Erkennung des Endes des Spurwechselvorgangs des geregelten Fahrzeugs (18) durch Auswertung des Fahrtrichtungsanzeigersignals (9), durch Auswertung der momentanen Gierrate (9) und/oder durch Auswertung eines Lenkradwinkelsignals (9), rückgängig gemacht wird.

10. Vorrichtung zur Regelung der Geschwindigkeit eines Kraftfahrzeugs (18), wobei die Vorrichtung ein Objektdetektionssystem (3) aufweist, mit dem die Sollgeschwindigkeit in Abhängigkeit mindestens eines vorausfahrender Fahrzeugs im Auswertebereich (20) des Objektdetektionssystem (3) bestimmt wird, wobei Spurwechselerkennungsmittel (9) vorgesehen sind, die einen bevorstehenden Spurwechsels des geregelten Fahrzeugs (18) erkennen können und bei Erkennung eines bevorstehenden Spurwechsels zur Berechnung der Sollgeschwindigkeit zusätzlich Fahrzeuge auf der benachbarten Zielfahrspur (R) berücksichtigt werden, indem der Auswertebereich des Objektdetektionssystem, (3) in Richtung Zielfahrspur (R) erweiterte wird, **dadurch gekennzeichnet, dass** in der Vorrichtung das Verfahren nach einem der Ansprüche 1 bis 9 abläuft.

## Claims

1. Method for regulating the speed of a motor vehicle (18) which is equipped with an object detection system (3) and in which the target speed is determined on the basis of at least one vehicle travelling in front in the evaluation range (20) of the object detection system (3), wherein recognition of an imminent change of lane by the regulated vehicle (18) prompts vehicles in the adjacent destination lane (R) to be additionally taken into account for calculating the target speed by extending (21) the evaluation range (20) in the direction of the destination lane, and only the vehicles in the destination lane (R) which are at a shorter distance (dx1, dx2) from the regulated vehicle (18) than a predetermined distance value are taken into account, and wherein the evaluation range (22) on the side (L) opposite the destination lane is reduced during the change of lane, **characterized in that** the reduction in the evaluation range (22) on the side (L) opposite the destination lane is made only within the distance range (dx1, dx2) within which the evaluation range on the destination lane side (R) is extended.

2. Method according to Claim 1, **characterized in that** the evaluation range (20) is essentially the lane (M) currently in use.

3. Method according to Claim 1 or 2, **characterized in that** the predetermined distance value (dx1, dx2) is a firmly prescribed value.

4. Method according to Claim 1 or 2, **characterized in that** the predetermined distance value (dx1, dx2) is a variable value.

5. Method according to Claim 4, **characterized in that** the predetermined distance value (dx1, dx2) is dependent on the speed (v) of the regulated vehicle (18).

6. Method according to one of the preceding claims, **characterized in that** the predetermined distance value (dx1, dx2) is dependent on the relative speed (vrel) of the detected vehicle in the destination lane (R) relative to the regulated vehicle (18).

7. Method according to one of the preceding claims, **characterized in that** an imminent change of lane by the regulated vehicle (18) is recognized by virtue of evaluation of the direction-of-travel indicator signal (9), by virtue of evaluation of the current yaw rate (9) and/or by virtue of evaluation of a steering-wheel angle signal (9).

8. Method according to one of the preceding claims, **characterized in that** the extension of the evaluation range (21) on the destination lane side (R) and/or the reduction in the evaluation range (22) on the side (L) opposite the destination lane side is/are reversed after a predetermined period of time has elapsed.

9. Method according to one of the preceding claims, **characterized in that** the extension of the evaluation range (21) on the destination lane side (R) and/or the reduction in the evaluation range (22) on the side (L) opposite the destination lane side is/are reversed following recognition of the end of the lane change process by the regulated vehicle (18) by virtue of evaluation of the direction-of-travel indicator signal (9), by virtue of evaluation of the current yaw rate (9) and/or by virtue of the evaluation of a steering-wheel angle signal (9).

10. Apparatus for regulating the speed of a motor vehicle (18), wherein the apparatus has an object detection system (3) which is used to determine the target speed on the basis of at least one vehicle travelling in front in the evaluation range (20) of the object detection system (3), wherein lane change recognition means (9) are provided which are able to recognize an imminent change of lane by the regulated vehicle (18), and recognition of an imminent change of lane prompts vehicles in the adjacent destination lane (R) to be additionally taken into account for calculating the target speed by extending the evaluation range of the object detection system (3) in the direction of the destination lane (R), **characterized in that** the apparatus executes the method according to one of Claims 1 to 9.

## Revendications

1. Procédé de régulation de la vitesse d'un véhicule automobile (18), lequel est équipé d'un système de détection d'objet (3) et avec lequel la vitesse de consigne est déterminée en fonction d'au moins un véhicule qui précède dans la plage d'analyse (20) du système de détection d'objet (3), procédé selon lequel, en cas de détection d'un changement de voie imminent du véhicule régulé (18), les véhicules sur la voie de circulation destinataire (R) voisine sont également pris en compte pour le calcul de la vitesse de consigne en ce que la plage d'analyse (20) est élargie (21) en direction de la voie de circulation destinataire, et seuls sont pris en compte les véhicules sur la voie de circulation destinataire (R) dont la distance (dx1, dx2) par rapport au véhicule régulé (18) est inférieure à une valeur de distance prédéfinie, et procédé selon lequel la plage d'analyse (22) sur le côté (L) opposé à la voie de circulation destinataire est réduite pendant le changement de voie, **caractérisé en ce que** la réduction de la plage d'analyse (22) sur le côté (L) opposé à la voie de circulation destinataire ne s'effectue qu'à l'intérieur de la plage de distances (dx1, dx2) dans laquelle la plage d'analyse sur la voie de circulation destinataire (R) est élargie.

2. Procédé selon la revendication 1, **caractérisé en ce que** la plage d'analyse (20) est pour l'essentiel la voie de circulation (M) actuellement parcourue.

3. Procédé selon la revendication 1 ou 2, **caractérisé en ce que** la valeur de distance prédéfinie (dx1, dx2) est une valeur prédéfinie fixe.

4. Procédé selon la revendication 1 ou 2, **caractérisé en ce que** la valeur de distance prédéfinie (dx1, dx2) est une valeur variable.

5. Procédé selon la revendication 4, **caractérisé en ce que** la valeur de distance prédéfinie (dx1, dx2) est dépendante de la vitesse (v) du véhicule régulé (18).

6. Procédé selon l'une des revendications précédentes, **caractérisé en ce que** la valeur de distance prédéfinie (dx1, dx2) est dépendante de la vitesse relative (vrel) du véhicule détecté sur la voie de circulation destinataire (R) par rapport au véhicule régulé (18).

7. Procédé selon l'une des revendications précédentes, **caractérisé en ce que** la détection d'un changement de voie imminent du véhicule régulé (18) s'effectue en analysant le signal indicateur de sens de circulation (9), en analysant le taux de lacet (9) momentané et/ou en analysant un signal d'angle du volant (9).

8. Procédé selon l'une des revendications précédentes, **caractérisé en ce que** l'élargissement de la plage d'analyse (21) du côté de la voie de circulation destinataire (R) et/ou la réduction de la plage d'analyse (22) sur le côté (L) opposé à la voie de circulation destinataire est annulé après écoulement d'une durée prédéfinie.

9. Procédé selon l'une des revendications précédentes, **caractérisé en ce que** l'élargissement de la plage d'analyse (21) du côté de la voie de circulation destinataire (R) et/ou la réduction de la plage d'analyse (22) sur le côté (L) opposé à la voie de circulation destinataire est annulé après avoir détecté la fin de la manoeuvre de changement de voie du véhicule régulé (18) en analysant le signal indicateur de sens de circulation (9), en analysant le taux de lacet (9) momentané et/ou en analysant un signal d'angle du volant (9).

10. Dispositif de régulation de la vitesse d'un véhicule automobile (18), le dispositif présentant un système de détection d'objet (3), avec lequel la vitesse de consigne est déterminée en fonction d'au moins un véhicule qui précède dans la plage d'analyse (20) du système de détection d'objet (3), des moyens de détection de changement de voie (9) étant prévus, lesquels peuvent détecter un changement de voie imminent du véhicule régulé (18) et, en cas de détection d'un changement de voie imminent, les véhicules sur la voie de circulation destinataire (R) voisine sont également pris en compte pour le calcul de la vitesse de consigne en ce que la plage d'analyse du système de détection d'objet (3) est élargie en direction de la voie de circulation destinataire (R), **caractérisé en ce que** le procédé selon l'une des revendications 1 à 9 est mis en oeuvre dans le dispositif.
